# EUROPÄISCHE PATENTSCHRIFT

(11) **EP 0 504 955 B1**
(45) Veröffentlichungstag und Bekanntmachung des Hinweises auf die Patenterteilung: **06.12.1995**
(21) Anmeldenummer: 92200419.7
(22) Anmeldetag: 14.02.1992
(51) Int. Cl.: H02G 3/10

(54) **Aufbaueinheit für elektrisches Material, sowie Aufbaukappe und Montageplatte die erlauben, solche Aufbaueinheiten zu verwirklichen**
Unit for electrical equipment, and cap and mounting plate for realising such a unit
Unité pour matériel électrique, et bonnet et plaque de montage permettant de réaliser une telle unité

(30) Priorität: 18.03.1991 BE 9100252
(43) Veröffentlichungstag der Anmeldung: 23.09.1992
(73) Patentinhaber: NIKO, N.V., B-9100 Sint-Niklaas (BE)
(72) Erfinder: Verbeke, Bruno Eugène Alain, B-9111 Belsele (BE)
(74) Vertreter: Donné, Eddy

(56) Entgegenhaltungen:
- DE-A- 3 500 655
- DE-U- 8 808 075
- US-A- 2 075 547

## Beschreibung

Diese Erfindung bezieht sich auf eine Aufbaueinheit für elektrisches Material, namentlich eine Einheit die ein Gehäuse bildet für Montageelemente wie Schalter, Steckdosen, Druckschalter und solche. Eine derartige Aufbaueinheit gemäß dem Oberbegriff des Anspruchs 1 ist aus dem Dokument US-A-2 075 547 bekannt. Es ist bekannt, daß in elektrischen Anlagen mit Aufbauleitungen immer mehr geschlossene Kabelrinnen Anwendung finden, auch flache Röhre oder Schieberöhre genannt.

Der Anschluß solcher Kabelrinnen an Aufbauelemente, wie Aufbauschalter setzt aber bestimmte Probleme, die hauptsächlich herrühren aus der Tatsache daß der Anschluß bestimmten Sicherheitsvorschriften entsprechen soll.

So ist es in bestimmten Ländern Vorschrift, daß die Kabelrinne oder irgendwelche sonstige Leitung bis in das Gehäuse des Aufbauelements reicht, in solcher Weise, daß keine scharfe Gegenstände zwischen das Ende der Kabelrinne oder der Leitung einerseits, und das Gehäuse andererseits angebracht werden können, die zu einer Beschädigung der Verdrahtung führen könnten.

Einer bekannten Konstruktion nach findet der Anschluß der Kabelrinne an das Aufbauelement statt mittels einer Montageplatte, die eine größere Montagehöhe aufweist als die Kabelrinne, dies und das derartig, daß die Kabelrinne in die Montageplatte hineingeschoben werden kann.

Bestimmte Montagevorschriften fordern aber, daß die Leitungen isoliert sein sollen der Mauer gegenüber, dies auch unterhalb des Aufbauelements. Die verwendung der vorhergenannten Konstruktion mit der starken Montageplatte hat dann auch den Nachteil, daß, um den genannten Bedingungen zu entsprechen, der untere und obere Teil der Kabelrinnen in verschiedenen Längen abgeschnitten werden sollen, einerseits, damit der untere Teil eine durchgehende Isolation bilden würde und andererseits weil die Leitungen an der Oberseite entlang aus der Kabelrinne heraus zum Aufbauelement geführt werden könnten. Das Abschneiden der Kabelrinnen an so einem Aufbauelement bedarf dann auch einiger Genauigkeit sowie mehr Zeit als üblich, da der untere und der obere Teil an verschiedenen Stellen abgeschnitten werden sollen.

Die Verwendung einer starken Montageplatte ist außerdem wenig ästhetisch.

Die durch die Erfindung zu lösende Aufgabe ist die Schöpfung einer Aufbaueinheit, bestehend aus einer Montageplatte und einer Aufbaukappe, welche die genannten Nachteile nicht aufweist, und sowohl an runde wie an flache Röhre angeschlossen werden kann. Die Aufgabe wird durch eine Aufbaueinheit mit den Merkmalen des Anspruchs 1 gelöst.

Mit der Absicht die Vorteile der Erfindung besser zu zeigen, sind hier weiter als Beispiele ohne jedem einschränkenden Charakter einige bevorzugte Verwirklichungsformen beschrieben worden, Bezug nehmend auf die beiliegenden Zeichnungen, in denen:
Abbildung 1 eine bekannte Form einer Aufbaueinheit darstellt;
Abbildung 2 einen Durchschnitt darstellt laut Linie II-II in Abbildung 1;
Abbildung 3 eine Aufbaueinheit nach der Erfindung darstellt in demontiertem Zustand;
Abbildung 4 die Aufbaueinheit aus Abbildung 3 in montiertem Zustand darstellt;
Abbildung 5 einen Durchschnitt laut V-V in Abbildung 4 darstellt;

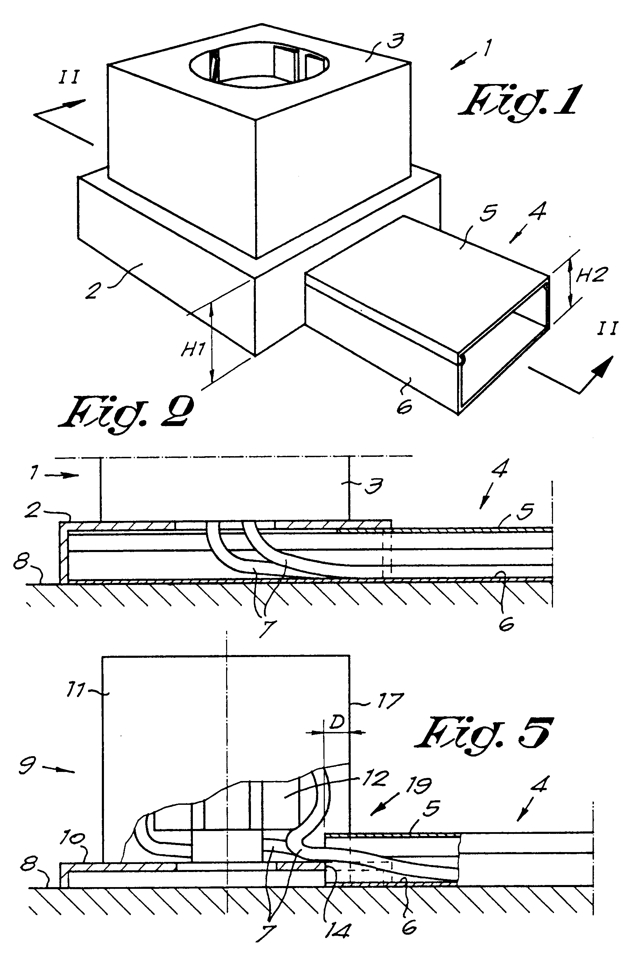

Wie dargestellt in Abbildung 1 ist es bekannt, daß eine Aufbaueinheit 1 für die Montage von elektrischem Material bestehen kann aus einer Montageplatte 2 und einer Aufbaukappe 3. Es ist ebenfalls bekannt, daß beim Anschluß an ein flaches Rohr 4 eine Montageplatte 2 verwendet wird, die eine größere Aufbauhöhe aufweist als die Aufbauhöhe H2 des flachen Rohrs 4.

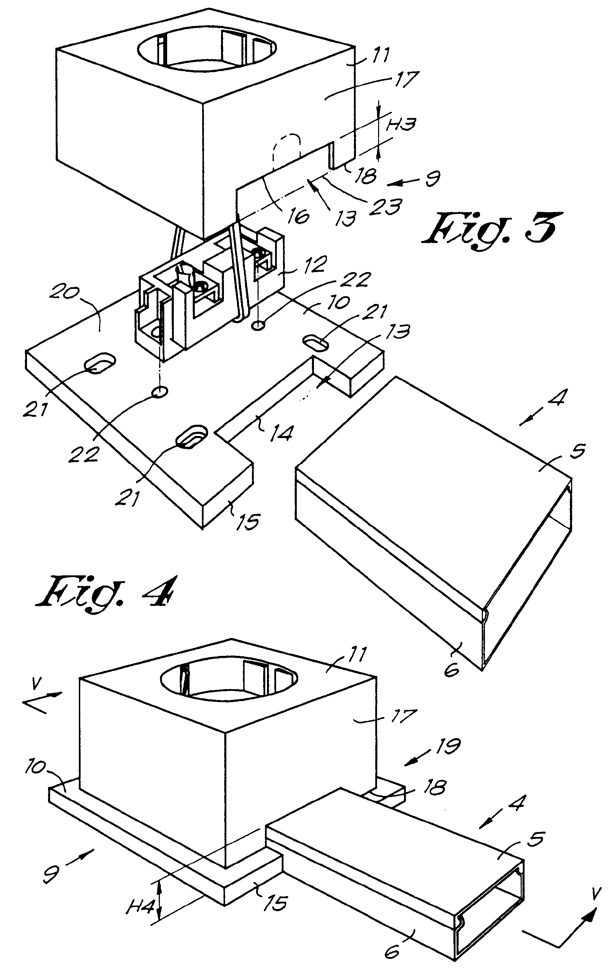

Wie dargestellt in Abbildung 2 zeigt die Verwendung einer solchen Aufbaueinheit 1 den Nachteil, daß bei der Montage der obere Teil 5 des flachen Rohres 4 kürzer abgeschnitten werden soll als der untere Teil 6, um zu erreichen, daß der untere Teil 6 eine durchgehende Isolation unterhalb der Verdrahtung 7 bildet, in der Weise, daß letztere keinen Kontakt mit der Wand 8 machen kann, wie gefordert wird in den diesbezüglichen Vorschriften.

Wie dargestellt in den Abbildungen 3 bis 5 besteht die Aufbaueinheit 9 laut der Erfindung hierzu hauptsächlich aus einer Montageplatte 10 und einer Aufbaukappe 11, in die ein Montageelement 12 montiert werden kann, wobei diese Aufbaueinheit 9 das Merkmal zeigt, daß sowohl die Montageplatte 10 als die Aufbaukappe 11 ausgestattet sind mit Mitteln die gemeinschaftlich einen Sitz 13 bilden für den Anschluß einer Leitung.

Wie dargestellt in Abbildung 3 bestehen diese Mittel aus einerseits einer Aussparung 14 im Rande 15 der Montageplatte 2 und andererseits aus einer Aussparung 16 in der Seitenwand 17, respektive dem unteren Rand 18 der Aufbaukappe 11. Wie dargestellt in Abbildung 5, erstreckt sich die Aussparung 14 in der Montageplatte 10 nur über eine geringe Entfernung D unterhalb der Aufbaukappe 11, ist aber von der Unterseite bis zur Oberseite der Montageplatte 10 durchgehend ausgeführt worden.

Die Aussparungen 14 und 16 sind vorzugsweise rechtwinklig ausgeführt worden und deren Abmessungen stimmen überein mit den Normalmaßen eines flachen Rohrs 4.

Die Höhe H3 der Aussparung ist vorzugsweise mindesten gleich der Hälfte der Höhe H4 des Sitzes 13.

Aus Abbildung 5 geht deutlich hervor, daß beim Anschluß 19 der Aufbaueinheit 9 am flachen Rohr 4 der obere Teil 5 und der untere Teil 6 jetzt auf gleicher Länge abgeschnitten werden können. Die Verdrahtung 7 kann ja ausgehend von Rohr 4 sofort über die obere Seite 20 der Montageplatte 10 geführt werden, wodurch diese Verdrahtung 7 unmöglich kontakt machen kann mit der Wand 8.

Es ist deutlich, daß die Montageplatte 10 in bekannter Weise ausgestattet werden kann mit Montageöffnungen 21, um die Montageplatte 10 an der Wand zu befestigen, zum Beispiel mittels Schrauben. Die Montageplatte 10 ist ebenfalls ausgestattet mit den notwendigen Mitteln, z.B. Schraubfassungen 22 zur Montage des vorhergenannten Elements 12. Die Aufbaukappe 11 kann in bekannter Weise befestigt werden, es sei an dem Element 12 oder unmittelbar auf der Montageplatte 10.

Obwohl im Beispiel der Abbildungen 3 und 4 das Element 12 und die Aufbaukappe 11 eine Wandsteckdose bilden, ist es deutlich, daß die Aufbaueinheit auch für andere Elemente Anwendung finden kann, wie allerlei Schalter, Dimmer, Signalbirnen usw.

## Patentansprüche

1. Aufbaueinheit für elektrisches Material, bestehend aus einer Montageplatte (10) und einer Aufbaukappe (11), die in ihre Seitenwand an ihrer Unterseite eine Aussparung aufweist für den Anschluß (19) eines Rohrs (4), dadurch gekennzeichnet, daß die Montageplatte (10) an ihrem Rande (15) mit einer Aussparung (14), die durchgehend von der Unterseite bis zur Oberseite ausgeführt ist und sich mindestens bis unterhalb die Aufbaukappe (11) erstreckt und gemeinsam mit der Aussparung (16) in der Aufbaukappe (11) einen Sitz (13) für das Rohr (4) bildet, ausgestaltet ist.

2. Aufbaueinheit laut Anspruch 1, dadurch gekennzeichnet daß die Aussparungen (14,16) rechtwinklig sind.

3. Aufbaueinheit laut Anspruch 1 oder 2, dadurch gekennzeichnet daß die Aussparung (14) in der Montageplatte (10) sich erstreckt bis gerade unterhalb der Aufbaukappe (11).

4. Aufbaueinheit laut einem der Ansprüche 1 bis 3, dadurch gekennzeichnet daß die Aussparung (16) in der Aufbaukappe (11) eine Höhe (H3) aufweist, die mindestens die Hälfte beträgt der Totalhöhe (H4) des Sitzes (13).

5. Aufbaueinheit laut einem der Ansprüche 1 bis 4, dadurch gekennzeichnet daß die Aussparung (16) in der Aufbaukappe (11) ausgestattet ist mit einem ausnehmbaren Abschluß (23).

6. Aufbaueinheit laut Anspruch 5, dadurch gekennzeichnet daß der Abschluß (23) gebildet wird von einem demontierbaren Verschlußelement (24).

## Claims

1. Assembly unit for electrical material consisting of an assembly plate (10) and a mounting cap (11) provided with a recess in its bottom side for the connection (19) of a tube (4), characterized in that the assembly plate (10) is provided with an uninterrupted recess (14) at its edge (15) from the bottom side to the top side which extends at least underneath the mounting cap (11) and together with the recess (16) in the mounting cap (11) forms a seat (13) for the tube (4).

2. Assembly unit according to claim 1, characterized in that the recesses (14,16) are rectangular.

3. Assembly unit according to claim 1 or 2, characterized in that the recess (14) in the assembly plate (10) extends to right underneath the mounting cap (11).

4. Assembly unit according to any of claims 1 to 3, characterized in that the recess (16) in the mounting cap (11) has a height (H3) which is at least half of the total height (H4) of the seat (13).

5. Assembly unit according to any of claims 1 to 4, characterized in that the recess (16) in the mounting cap (11) is provided with a removable lock (23).

6. Assembly unit according to claim 5, characterized in that the lock (23) is made of a detachable locking element (24).

## Revendications

1. Unité de construction pour un matériau électrique, constituée par une plaque de montage (10) et par un chapeau de construction (11) qui présente, dans sa paroi latérale sur son côté inférieur, un évidement pour le raccord (19) d'un tube (4), caractérisée en ce que la plaque de montage (10) sur son arête (15) est configurée à l'aide d'un évidement (14) qui est réalisé en continu depuis le côté inférieur jusqu'au côté supérieur, qui s'étend au moins jusqu'en dessous du chapeau de construction (11) et qui forme, conjointement avec l'évidement (16) pratiqué dans le chapeau de construction (11), un siège (13) pour le tube (4).

2. Unité de construction selon la revendication 1, caractérisée en ce que les évidements (14, 16) sont rectangulaires.

3. Unité de construction selon la revendication 1 ou 2, caractérisée en ce que l'évidement (14) pratiqué dans la plaque de montage (10) s'étend jusqu'à une position située exactement en dessous du chapeau de construction (11).

4. Unité de construction selon l'une quelconque des revendications 1 à 3, caractérisée en ce que l'évidement (16) pratiqué dans le chapeau de construction (11) présente une hauteur (H3) qui représente au moins la moitié de la hauteur totale (H4) du siège (13).

5. Unité de construction selon l'une quelconque des revendications 1 à 4, caractérisée en ce que l'évidement (16) pratiqué dans le chapeau de construction (11) est équipé d'un arrêt (23).

6. Unité de construction selon la revendication 5, caractérisée en ce que l'arrêt (23) est formé à partir d'un élément de fermeture démontable (24).
